# EUROPÄISCHE PATENTANMELDUNG

(11) **EP 3 763 837 A1**
(43) Veröffentlichungstag der Anmeldung: **13.01.2021**
(21) Anmeldenummer: 19185104.7
(22) Anmeldetag: 09.07.2019
(51) Int. Cl.: C22B 1/16, C22B 1/243, C22B 7/00, C22B 34/32

(54) **FORMGEBUNG VON CHROMERZPROZESS-RÜCKSTÄNDEN**

(71) Anmelder: BROTHER GROUP (HONG KONG) LIMITED, HONG KONG (CN)
(72) Erfinder: BOLL, Matthias, 51061 Köln (DE)
(74) Vertreter: Dr. Gassner & Partner mbB

(57) **Zusammenfassung**

Die Erfindung betrifft ein Verfahren zur Herstellung von Formkörpern enthaltend COPR, umfassend die Schritte:
a) Mischen von COPR mit Natriumhydroxid und ggf. Zuschlagsstoffen,
b) Formgebung, gegebenenfalls unter Verdichtung der Mischung,
c) Wärmebehandlung der in Schritt b) erhaltenen Formkörper bei einer Temperatur von mindestens 150 °C, vorzugsweise mindestens 180 °C und besonders bevorzugt mindestens 190 °C,
sowie die durch das Verfahren erhältlichen Formkörper, deren Verwendung zur Herstellung von Eisen-Chrom-Legierungen und Verfahren zur Herstellung von Eisen-Chrom-Legierungen, bei denen die Formkörper allein oder zusammen mit Chromerz aufgeschmolzen werden.

## Beschreibung

Die Erfindung betrifft das Gebiet der metallurgischen Aufarbeitung von Chromerzprozess-Rückständen, welche dem Fachmann auch als COPR (Chrome Ore Processing Residues) bekannt sind.

Die metallurgische Weiterverarbeitung von feinteiligen Rückständen (COPR) aus der chemischen Chromerzverarbeitung, d.h. der Herstellung von Chromaten aus Chromerz unter Einsatz von Natriumverbindungen und Sauerstoff bei erhöhter Temperatur, erfordert unter anderem, diese Rückstände (ggf. im Gemisch mit anderen Reaktionspartnern wie Reduktionsmitteln und/oder weiteren chemischen Verbindungen als Schlackebildner etc.) in eine stückige Form zu überführen. Ziel der metallurgischen Verarbeitung ist die Gewinnung von Eisen-Chromlegierungen (Ferrochromes) mit einem Chromanteil, der für die Verwendung in der Edelstahlindustrie geeignet ist, sowie von Schlacke, die in der Aluminiumindustrie eingesetzt werden kann.

Die Formgebung ist aus mehreren Gründen notwendig: Zum einen muss bei der Handhabung von Stoffen, die ggf. noch Cr(VI) enthalten, aus Gründen der Arbeitssicherheit die Staubentwicklung minimiert werden. Zum anderen ist die Verarbeitung von Stäuben in metallurgischen Hochtemperaturprozessen schwierig, da durch hohe Temperaturen in diesen Prozessen immer Aufwinde entstehen, die den Staub aus einem Reaktor in einen Filter tragen und dort mittelfristig Abluftkanäle zusetzen würden. Bei der Verwendung eines Schacht- oder Hochofens dient COPR zusammen mit dem Koks respektive der Kohle zudem als Teil des Stützgerüstes im Ofen, wodurch eine Verwendung als Staub ausgeschlossen ist, da dieser den Gastransport unterbinden würde.

In der Ferrochromindustrie werden daher beispielsweise Pellets eingesetzt, die aus einem - gemeinsam mit einem Reduktionsmittel wie Kohle (insbesondere in Form von Koks oder Anthrazit) gemahlenen - Chromerz erzeugt werden. Zu diesem Zweck wird dem Mahlgut ein Binder - in der Regel auf Basis eines Schichtsilikates - zugegebene und in einer Pelletiertrommel zu Kugeln geformt. Diese Kugeln werden dann bei 1400°C gesintert. Es werden sehr feste Kugeln erhalten, die eine Kaltdruckfestigkeit in der Größenordnung von 2000 N aufweisen können.

Allerdings ist die notwendige hohe Temperatur zur Durchführung des Sinterprozesses nachteilig in Bezug auf die Kosten für die Anlage und die Durchführung des Prozesses. Des Weiteren führt die Verwendung eines Schichtsilikates wie Bentonit als Binder bei gleichzeitigem Ersatz des Chromerzes zu nicht formstabilen Ergebnissen, die für eine Lagerung oder einen nachfolgenden Sinterprozess nicht in Frage kommen.

Daher bestand Bedarf an einem Verfahren, mit dem das typischerweise als Pulver anfallende COPR und ggf. Zusatzstoffe wie Kohle zur Reduktion in Formkörper umgewandelt werden können, die eine für die Lagerung und den Transport ausreichende mechanische Stabilität aufweisen.

Von der Firma Küttner wurde hierfür ein Verfahren vorgeschlagen, bei dem Metalloxidstäube (vor allem Eisenoxidstäube) zusammen mit Kohlenstaub und ggf. weiteren Zuschlägen durch Zement gebunden und dann in Form von Steinen einem Schacht- bzw. Hochofen zugeführt werden. Allerdings führt die Verwendung von Zement zur Bildung erheblicher Mengen an Schlacke, und die darin enthaltenen unerwünschten Elemente erschweren die Aufarbeitung derselben. Zudem wird das Verfahren durch den Einsatz von Zement als Binder in seiner Wirtschaftlichkeit beeinträchtigt. Gleichzeitig wird die chemische Zusammensetzung der Schlacke beeinflusst, was für das weitere Verfahren nachteilig sein kann.

Ein weiterer einsetzbarer anorganischer Binder ist Natriumsilikat (Natronwasserglas), das in der Bauindustrie zum Beispiel als Binder von zement- oder anhydritgebundenen (CaSO₄) Fußböden Verwendung findet. Durch Mischen von COPR mit Kohle, Zuschlagsstoffen und Natriumsilikatlösung können nach dem Trocknen an Luft und/oder in einer CO₂-Atmosphäre formstabile Körper erhalten werden, die sich zum Einsatz in metallurgischen Hochtemperaturprozessen eignen. Neben Natronwasserglas kommen hierfür auch Wassergläser anderer Alkalimetalle in Betracht. Allerdings bringt die Verwendung von Wasserglas zwei Nachteile mit sich: Das Verfahren wird durch den Einsatz von teurem Natronwasserglas in seiner Wirtschaftlichkeit beeinträchtigt.

Es war daher die Aufgabe der Erfindung, ein Verfahren zur Formgebung von COPR bereitzustellen, welches die Nachteile des Stands der Technik wie zum Beispiel die Notwendigkeit einer hohen Verarbeitungstemperatur, die signifikante Erhöhung der Schlackenmenge und die mangelhafte Bindefähigkeit der Schichtsilikate teilweise oder vollständig vermeidet. Darüber hinaus sollte ein wirtschaftlich vorteilhaftes Bindemittel bereitgestellt werden, welches ein solches Verfahren ermöglicht. Durch eine (optional anschließende) Behandlung bei Temperaturen von 650°C oder darüber unter Ausschluss von Luft lassen sich Cr(VI) freie Formkörper herstellen.

Überraschend wurde nun gefunden, dass die Zugabe von Natriumhydroxid die gestellte Aufgabe löst und als Mischung mit COPR und ggf. Zuschlagsstoffen wie Koks und Sand bereits bei Temperaturen unterhalb von 200°C in kurzer Zeit formstabile Formkörper bildet, die eine überraschend hohe Kaltdruckfestigkeit besitzen. Natriumhydroxid hat nicht nur ökonomische Vorteile, sondern trägt keine zusätzlichen Fremdkomponenten in die Mischung ein. Das enthaltene Natrium erhöht zwar den Natriumgehalt im Gemisch. Da jedoch COPR, bedingt durch dessen Herstellungsprozess unter Verwendung von Natriumcarbonat, immer auch größere Mengen Natriumionen enthält, stellt dies keine grundsätzlich neue oder zusätzliche Schwierigkeit oder Nachteil dar.

Weiterhin ist Natriumhydroxid vergleichsweise einfach in der Handhabung und kann beispielsweise als wässrige Lösung mit einem Gehalt von mindestens 15 Gew.-%, vorzugsweise als wässrige Lösung mit einem Gehalt von mindestens 25 Gew.-%, vorzugsweise mit einem Gehalt von 40 - 55 Gew.-% NaOH mit dem COPR und ggf. Zuschlagsstoffen gemischt werden.

Die Erfindung betrifft daher ein Verfahren zur Herstellung von Formkörpern enthaltend COPR, umfassend die Schritte:
a) Mischen von COPR mit Natriumhydroxid und ggf. Zuschlagsstoffen,
b) Formgebung, gegebenenfalls unter Verdichtung der Mischung,
c) Wärmebehandlung der in Schritt b) erhaltenen Formkörper bei einer Temperatur von mindestens 150 °C, vorzugsweise mindestens 180 °C und besonders bevorzugt mindestens 190 °C.

### Schritt a)

COPR wird mit Natriumhydroxid und ggf. Zuschlagstoffen gemischt. Geeignete Mischverfahren sind dem Fachmann vertraut. In Frage kommen für die Aufgabe klassische Mischer, die aus einer rotierenden Trommel bestehen, ebenso wie dynamische Mischer aller Art mit einem Rotor, der einen für die Mischaufgabe ausreichenden Energieeintrag aufbringen kann, ebenso wie geeignete statische Mischer. In einer bevorzugten Ausführungsform werden COPR, Wasser, Natriumhydroxid und ggf. Zuschlagstoffe gemischt. In einer weiter bevorzugten Ausführungsform werden der COPR, Wasser, Natriumhydroxid, Sand und ggf. weiteren Zuschlagstoffe gemischt. Die Zumischung von Wasser kann vor, zusammen mit oder nach Zumischung von Natriumhydroxid erfolgen. Bevorzugt erfolgt die Zumischung von Wasser und Natriumhydroxid zusammen, beispielsweise in Form von Natronlauge.

Die im COPR bereits enthaltenen Natriumionen tragen nicht zur Verfestigung der Formkörper bei, da sie zum Beispiel als Kation in einem Aluminat vorliegen.

Der Anteil an zugemischtem Natriumhydroxid bezogen auf das eingesetzte COPR beträgt üblicherweise 0,5 bis 20 Gew.-%, vorzugsweise 2 bis 15 Gew.-%, besonders bevorzugt 4 bis 12 Gew.-%. Die Angabe Gew.-% bezogen auf COPR bedeutet g/NaOH pro 100g COPR.

Als Zuschlagstoffe kommen insbesondere folgende in Frage: Kalk, gebrannter Kalk, Sand, Aluminiumoxid, Borate wie Borax, Silikate wie Schichtsilikate, Fluoride, Kohle, Koks, Anthrazit, organische Zuschlags- und Bindemittel. Besonders bevorzugt werden Sand und Kohle oder Koks, meist bevorzugt Quarzsand und Koks als Zuschlagstoffe verwendet. Im Sinne der vorliegenden Erfindung bezeichnet der Ausdruck Sand vorzugsweise Mineralien, die überwiegend oder vollständig aus SiO₂ bestehen und einen Äquivalentdurchmesser nach DIN 4022 von 0,063 bis 2 mm aufweisen.

Bevorzugt beträgt der Anteil an Zuschlagstoffen der in Schritt a) erhaltenen Mischung bezogen auf COPR von 0% bis 200%, besonders bevorzugt 10% bis 100%, meist bevorzugt 30% bis 80%.

Bevorzugt beträgt der Anteil an Kohle oder Koks der in Schritt a) erhaltenen Mischung bezogen auf COPR von 1% bis 40%, besonders bevorzugt 10% bis 30%.

Bevorzugt beträgt der Anteil an Sand der in Schritt a) erhaltenen Mischung bezogen auf COPR von bis 0% bis 200%, besonders bevorzugt 5% bis 100%, meist bevorzugt 25% bis 80%.

Bevorzugt beträgt der Anteil an Wasser der in Schritt a) erhaltenen Mischung bezogen auf COPR von 10% bis 200%, besonders bevorzugt 20% bis 100%.

Typischerweise wird der Mischung in Schritt a) kein Bentonit, bevorzugt weder Bentonit noch andere Schichtsilikate zugegeben.

Weiterhin kann in Schritt a) auf die Zugabe von Chromerz verzichtet werden.

### Schritt b)

Die in Schritt a) anfallende Mischung wird unter Formgebung verdichtet. Dies kann beispielweise durch Pressen in eine Form erfolgen. Weiterhin kann eine Verdichtung durch Vibration wie z.B. Rütteln oder Klopfen erfolgen. Bei der Verdichtung wird die Mischung in eine gewünschte Form beispielsweise in Würfel, Rhomben, Sphäroide, Halbkugeln gebracht.

Insbesondere kann das Material auch durch einen Pelletierschritt verdichtet und in die gewünschte Form gebracht werden. In einer bevorzugten Ausführungsform weisen die so erhaltenen Formkörper Ausdehnungen von mindestens 2 mm in einer Dimension und mindestens 4 mm in den beiden anderen Dimensionen auf, wobei die maximale Ausdehnung in allen Dimension jeweils 3 cm, vorzugsweise 2 cm für die Anwendung in einem Lichtbogenofen nicht überschreiten sollte. Bevorzugt werden Formkörper erhalten mit einem Volumen von 0.3 bis 27 cm³, besonders bevorzugt 0,6 bis 9 cm³ und ganz besonders bevorzugt von 0,8 bis 3 cm³ auf.

In einer weiteren bevorzugten Ausführungsform werden die Formkörper in eine deutlich größere Form gebracht, beispielsweise in Form von Würfeln, Quadern oder anderen, raumfüllenden Polyedern mit Kantenlängen zwischen 4 und 20 cm. Diese eignen sich insbesondere für die Verladung in gestapelter und durch Bänder zusammengehaltener Form.

### Schritt c)

Hierin erfolgt die Wärmebehandlung bei einer Temperatur von mindestens 150 °C, vorzugsweise mindestens 180°C und besonders bevorzugt mindestens 190°C. Zum Erzielen einer ausreichenden Minimalfestigkeit genügt es, wenn die Temperatur bei der Wärmebehandlung 350°C, vorzugsweise 240°C, besonders bevorzugt 200°C nicht übersteigt.

Sofern die in Schritt a) erhaltene Mischung Kohle oder Koks enthält, ist es vorteilhaft, die Wärmebehandlung in Schritt c) oder bei einer auf Schritt c) nachfolgenden Wärmebehandlung bei einer Temperatur von 600 bis 900°C, vorzugsweise 620 bis 800°C besonders bevorzugt 640 bis 700°C durchzuführen, wodurch eine signifikante Verringerung des Gehalts an Cr(VI) in den Formkörpern erzielt wird.

Sofern die in Schritt a) erhaltene Mischung Kohle oder Koks enthält, ist es weiter vorteilhaft, die Wärmebehandlung in Schritt c) oder bei einer auf Schritt c) nachfolgenden Wärmebehandlung bei einer Temperatur von 1200 bis 1600°C, vorzugsweise 1250 bis 1500°C besonders bevorzugt 1300 bis 1400°C durchzuführen, wodurch eine besonders hohe Festigkeit der erhaltenen Formkörper, zusammen mit einer signifikanten Verringerung des Gehalts an Cr(VI) in den Formkörpern erzielt wird. In derart vorbehandelten Formkörpern liegt ein Teil des Eisens bereits in metallischer Form vor (pre-reduced), was die weitere Verarbeitung im Elektrolichtbogenofen erleichert.

Typischerweise erfolgt die Wärmebehandlung über einen Zeitraum von 15 min bis 8 Stunden, vorzugsweise von 30 min bis 4 Stunden und meist bevorzugt von 1 bis 2 Stunden.

Die Formkörper werden während dieser Wärmebehandlung getrocknet, sodass die erwärmte, feuchte Luft in einer besonderen Ausführungsform während des Erhärtungs- und Trocknungsprozesses abgeführt wird.

### COPR

Für das erfindungsgemäße Verfahren wird vorzugsweise ein COPR eingesetzt, der beim oxidativen alkalischen Aufschluss von Chromerzen, beispielsweise Chromit für die Herstellung von Natriummonochromat anfallen. Typischerweise fällt dieses als unlöslicher Rückstand in feinpulveriger Form an.

Besonders bevorzugt wird in dem erfindungsgemäßen Verfahren ein COPR eingesetzt, der beim Herstellungsprozess von Natriummonochromat ausgehend von Chromit über einen oxidativen alkalischen Aufschluss mit Natriumcarbonat (No-Lime-Verfahren, CaO-Gehalt von < 5 Gew.-%) anfällt. Andererseits ist auch der Einsatz von COPR aus dem High-Lime-Verfahren ist grundsätzlich denkbar.

Bevorzugt weist COPR einen Gehalt an Cr(VI) von 0 bis 15000 ppm, besonders bevorzugt von 100 bis 10000 ppm auf.

Bevorzugt wird COPR verwendet, der im Produktionsprozess von Natriummonochromat nach Fest-Flüssig-Separation als feuchter Filterkuchen anfällt. Dieser kann dem Schritt a) direkt zugeführt werden.

Besonders bevorzugt weist COPR folgende Zusammensetzung auf:
- Chrom(III)-oxid (Cr₂O₃): 7 bis 13 Gew.-%, bevorzugt 7.5 bis 12.5 Gew.-%
- Aluminiumoxid (Al₂O₃): 10 bis 30 Gew.-%, bevorzugt 18 bis 24 Gew.-%
- Eisen(III)oxid (Fe₂O₃): 42 bis 50 Gew.-%, bevorzugt 42 bis 48 Gew.-%
- Magnesiumoxid (MgO): 9 bis 18 Gew.-%, bevorzugt 10 bis 17 Gew.-%
- Calciumoxid (CaO): 0 bis < 10 Gew.-%, bevorzugt < 5 Gew.-%
- Siliciumoxid (SiO₂): 0 bis 3 Gew.-%, bevorzugt 1 bis 3 Gew.-%
- Vanadiumoxid (V₂O₅): 0 bis < 1 Gew.-%, bevorzugt < 0.5 Gew.-%
- Natriumoxid (Na₂O): 0 bis 5 Gew.-%, bevorzugt 2 bis 5 Gew.-%
- Natriummonochromat (Na₂CrO₄): 0.3 bis 4.7 Gew.-%

Die vorliegende Erfindung betrifft sowohl Formkörper erhältlich durch das erfindungsgemäße Verfahren, als auch die Verwendung von COPR zur Herstellung solcher Formkörper. Weiterhin betrifft die Erfindung die Verwendung der Formkörpern zur Herstellung von Eisen-Chrom-Legierungen, insbesondere von Ferrochrom. Zudem umfasst die Erfindung Verfahren zur Herstellung von Eisen-Chrom-Legierungen, insbesondere von Ferrochrom, worin die erfindungsgemäßen Formkörper allein oder zusammen mit Chromerz aufgeschmolzen werden.

Anhand der nachfolgenden Beispiele wird die Erfindung näher erläutert, ohne dass dadurch eine Einschränkung der Erfindung bewirkt werden soll.

### Beispiel 1

Für die Verwendung von COPR in einem metallurgischen Prozess (hier: Aufschmelzen in einem Lichtbogenofen) wurde COPR mit Quarzsand mit einer Partikelgröße unter 2mm und Koks gemischt. Dazu wurde Chrom(VI) freies COPR, erhalten nach dem beispielweise in US 2015166411A1 offenbarten Verfahren, mit Sand und Koks (LSC Lignite Special Coke, LSC-Fines, Rheinbraun Brennstoff GmbH, Köln) gemischt, dann Wasser und 50%ige wässrige Natronlauge zugegeben, erneut gemischt, in Silikonformen mit 160 Würfelformen mit einer Kantenlänge von 1cm gegossen, das Material durch Klopfen der Formen auf einen Tisch verdichtet und anschließend in einem Ofen bei 200°C für 150 Minuten aufgeheizt bzw. getrocknet. Um dieselbe Ausgangsfeuchte in der Mischung zu garantieren, wurde bei den Versuchen mit geringerer Menge an Natronlauge deren Wasseranteil durch Zugabe von Wasser kompensiert, wie in Tabelle 1 dargestellt. Nach dem Aufheiz- und Trockenschritt wurden die Formen umgedreht, und die Würfelchen fielen heraus.

**Tabelle 1: Zusammensetzung der Mischungen unter Variation der Natriumhydroxidmenge bei insgesamt gleichbleibender Wassermenge.**

| Beispiel | COPR | Koks LSC Fines | Sand | Wasser | NaOH 50% | NaOH g/100g COPR |
|---|---|---|---|---|---|---|
| E1 | 200 | 32 | 51 | 56 | 57 | 14 |
| E2 | 200 | 32 | 51 | 60 | 48 | 12 |
| E3 | 200 | 32 | 51 | 64 | 40 | 10 |
| E4 | 200 | 32 | 51 | 68 | 32 | 8 |
| E5 | 200 | 32 | 51 | 72 | 24 | 6 |
| E6 | 200 | 32 | 51 | 76 | 16 | 4 |
| E7 | 200 | 32 | 51 | 80 | 8 | 2 |
| E8 | 200 | 32 | 51 | 84 | 0 | 0 |

Die Kaltdruckfestigkeit der so erhaltenen Formkörper wurde anschließend nach Abkühlen mittels Bruchtest bestimmt. Dabei wurde ein Würfel zwischen zwei parallel angeordneten Stahlplatten gelegt und mittels eines Hydrauliksystems die Platten ständig aufeinander zu bewegt und der Würfel im Spalt gepresst. Die angewandte Kraft wurde kontinuierlich gemessen. Die Messung wurde gestoppt, sobald die angewandte Kraft abnimmt, während sich die Platten noch aufeinander zu bewegen (Würfel ist gebrochen). Die in der beschriebenen Anordnung gemessene Maximalkraft in Newton wurde pro Mischung bei jeweils 15 Proben gemessen und daraus der Mittelwert gebildet. Die Ergebnisse sind in Tabellen 2 und 3 dargestellt.

**Tabelle 2: Kaltdruckfestigkeit ermittelt in einem Instrohm Druckmessgerät**

| **Beispiel:** | E1 | E2 | E3 | E4 | E5 | E6 | E7 | E8 |
|---|---|---|---|---|---|---|---|---|
| **Kaltdruckfestigkeit [N]:** | **75** | **49** | **47** | **47** | **45** | **49** | **12** | **6** |

Überraschend zeigte sich, dass bei Zusatz von Natriumhydroxid von mindestens 2%, bezogen auf das eingesetzte COPR, eine signifikante Erhöhung der Kaltdruckfestigkeit erzielt wird.

### Beispiel 2

Durchführung analog zu Beispiel 1 jedoch unter Verwendung von nicht vorbehandeltem COPR, d.h. COPR mit einem Cr(VI)-Gehalt von ca. 0,1Gew.-%. Die erzielten Kaltdruckfestigkeiten war vergleichbar mit denjenigen der Formkörper mit äquivalenter Mischung in Beispiel 1.

### Beispiel 3

Die in Beispiel 2 erhaltenen Formkörper wurden für 20 min. auf 650°C erhitzt und im Anschluss der Cr(VI)-Gehalt bestimmt. Der Cr(VI)-Gehalt der Formkörper betrug jeweils weniger als 1ppm.

### Beispiel 4

Die in Beispiel 2 erhaltenen Formkörper wurden für 15 min. auf 1300°C erhitzt und im Anschluss der Cr(VI)-Gehalt bestimmt. Der Cr(VI)-Gehalt der Formkörper betrug jeweils weniger als 1ppm. Zudem wurde eine deutliche Erhöhung der Kaltdruckfestigkeit der Formkörper im Vergleich gegenüber den Formkörpern aus Beispiel 2 festgestellt.

## Patentansprüche

1. Verfahren zur Herstellung von Formkörpern enthaltend COPR, umfassend die Schritte:
a) Mischen von COPR mit Natriumhydroxid und ggf. Zuschlagstoffen,
b) Formgebung unter Verdichtung der Mischung,
c) Wärmebehandlung der in Schritt b) erhaltenen Formkörper bei einer Temperatur von mindestens 150 °C, vorzugsweise mindestens 180 °C, besonders bevorzugt mindestens 190 °C.

2. Verfahren gemäß Anspruch 1, wobei Kohle oder Koks als Zuschlagstoff in Schritt a zugemischt wird.

3. Verfahren gemäß Anspruch 1 oder 2, wobei Sand als Zuschlagstoff in Schritt a zugemischt wird.

4. Verfahren gemäß einem oder mehreren der Ansprüche 1 bis 3, wobei Kalk oder gebrannter Kalk als Zuschlagstoff in Schritt a zugemischt wird.

5. Verfahren gemäß einem oder mehreren der Ansprüche 1 bis 4, worin vor, zusammen mit, oder nach Zumischung von Natriumhydroxid in Schritt a) Wasser zugemischt wird.

6. Verfahren gemäß einem oder mehreren der Ansprüche 1 bis 5, worin Natriumhydroxid in Form von Natronlauge zugemischt wird

7. Verfahren gemäß einem oder mehreren der Ansprüche 1 bis 6, worin der Anteil an Natriumhydroxid in der Mischung bezogen auf das eingesetzte COPR 0,5 bis 20 Gew.-%, vorzugsweise 2 bis 15 Gew.-% und besonders bevorzugt 4 bis 12 Gew.-% beträgt.

8. Verfahren gemäß einem oder mehreren der Ansprüche 1 bis 7, worin in Schritt b) Formkörper mit einem Volumen von 0.3 bis 27 cm³, besonders bevorzugt 0,6 bis 9 cm³ und ganz besonders bevorzugt von 0,8 bis 3 cm³ erhalten werden.

9. Verfahren gemäß einem oder mehreren der Ansprüche 1 bis 7, worin in Schritt b) Formkörper in Form von Würfeln, Quadern oder anderen raumfüllenden Polyedern mit Kantenlängen von 4 bis 20 cm erhalten werden.

10. Verfahren gemäß einem oder mehreren der Ansprüche 1 bis 9, worin die Temperatur bei der Wärmebehandlung in Schritt c) 350°C, vorzugsweise 240°C und besonders bevorzugt 200°C nicht übersteigt.

11. Verfahren gemäß einem oder mehreren der Ansprüche 2 bis 10, worin die in Schritt a) erhaltene Mischung Kohle oder Koks enthält und die Temperatur bei der Wärmebehandlung in Schritt c) oder in einer dem Schritt c) nachgelagerten Wärmebehandlung von 600 bis 900°C, vorzugsweise 620 bis 800°C besonders bevorzugt 640 bis 700°C beträgt.

12. Verfahren gemäß einem oder mehreren der Ansprüche 2 bis 10, worin die in Schritt a) erhaltene Mischung Kohle oder Koks enthält und die Temperatur bei der Wärmebehandlung in Schritt c) oder in einer dem Schritt c) nachgelagerten Wärmebehandlung von 1200 bis 1600°C, vorzugsweise 1250 bis 1500°C und besonders bevorzugt 1300 bis 1400°C beträgt.

13. Formkörper erhältlich durch das Verfahren gemäß einem oder mehreren der Ansprüche 1 bis 12.

14. Verwendung von Formkörpern gemäß Anspruch 13 zur Herstellung von Eisen-Chrom-Legierungen, insbesondere von Ferrochrom.

15. Verfahren zur Herstellung von Eisen-Chrom-Legierungen, insbesondere von Ferrochrom, worin Formkörper gemäß Anspruch 13 allein oder zusammen mit Chromerz aufgeschmolzen werden.
